# EUROPEAN PATENT APPLICATION

(11) **EP 3 330 924 A1**
(43) Date of publication of application: **06.06.2018**
(21) Application number: 16306599.8
(22) Date of filing: 01.12.2016
(51) Int. Cl.: G06T 7/55

(54) **METHOD FOR 3D RECONSTRUCTION OF AN ENVIRONMENT OF A MOBILE DEVICE, CORRESPONDING COMPUTER PROGRAM PRODUCT AND DEVICE**

(71) Applicant: Thomson Licensing, 92130 Issy-les-Moulineaux (FR)
(72) Inventor: Luo, Tao, 35576 Cesson Sévigné (FR); Robert, Philippe, 35576 Cesson Sévigné (FR); Alleaume, Vincent, 35576 Cesson Sévigné (FR)
(74) Representative: Huchet, Anne

(57) **Abstract**

A method is proposed for 3D reconstruction of an environment of a mobile device comprising a camera. Such method comprises:
• calculating (100) a coarse 3D reconstruction of at least one area of the environment by a first reconstruction method that takes into account first pictures of the at least one area captured by the camera;
• determining automatically (110) if at least one target part exists in the environment based on a detection of at least one object attribute taking into account at least one of the first pictures;
• calculating (120) a refined 3D reconstruction of the at least one target part by a second reconstruction method that takes into account second pictures of the at least one target part captured by the camera;
• aggregating (130) the calculated reconstructions for providing the 3D reconstruction of the environment.

## Description

### 1. FIELD OF THE DISCLOSURE

The field of the disclosure is that of 3D reconstruction of an environment.

More specifically, the disclosure relates to a method for 3D reconstruction of an environment of a mobile device.

The disclosure can be of interest in any field where 3D reconstruction is of interest in mobile devices. This can be the case for instance in fields like navigation, autonomous robotics, 3D printing, virtual reality, and augmented reality, etc.

### 2. TECHNOLOGICAL BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Currently, there are developments for adapting methods like "Structure from Motion" (SfM), "Multi-View Stereo" (MVS), or Simultaneous Localization And Mapping" (SLAM) so that they can be implemented on mobile devices for live or real-time 3D reconstruction (see for instance *"*P. Ondruska, P. Kohli, S. Izadi. "MobileFusion: Real-time Volumetric Surface Reconstruction and Dense Tracking on Mobile Phones." IEEE Transactions on Visualization & Computer Graphics, 2015*.*"). However, high-frequency noise exists related to these methods. Furthermore, these techniques usually lead to good results only when reconstructing the geometry of well-textured objects. For objects with particular characteristics like shiny material or less texture, the quality of the reconstruction becomes worse and alternative technics may be considered for achieving good 3D reconstruction.

In that perspective, photometric stereo (see for instance "C. Hernandez, G. Vogiatzis, R. Cipolla. "Multi-view photometric stereo", PAMI, 2008*.*") is an alternative way to improve the reconstruction quality of finer details for such objects with shiny material or less texture. However, under the limitation of mobile hardware, e.g. memory, power of processing and battery capacity, it is impossible to apply such photometric stereo method in a large-scale environment of a mobile device.

There is thus a need for a method for 3D reconstruction of an environment of a mobile device while limiting the computational needs and allowing a good reconstruction quality of finer details for objects with particular characteristics, e.g. made of shiny material or with less texture.

### 3. SUMMARY

A particular aspect of the present disclosure relates to a method for 3D reconstruction of an environment of a mobile device comprising at least one camera. Such method comprises:
- calculating a coarse 3D reconstruction of at least one area of the environment by a first reconstruction method, the first reconstruction method taking into account at least first pictures of the at least one area captured by the at least one camera;
- determining automatically if at least one target part exists in the environment based on at least a detection of at least one object attribute, the detection taking into account at least one of the first pictures;
- calculating a refined 3D reconstruction of the at least one target part by a second reconstruction method, the second reconstruction method taking into account at least second pictures of the at least one target part captured by the at least one camera;
- aggregating the calculated reconstructions for providing the 3D reconstruction of the environment.

Thus, the present disclosure proposes a new and inventive solution for determining a 3D reconstruction of an environment of a mobile device while limiting the computational needs for its determination.

For this to be possible, a coarse 3D reconstruction is performed based on first images captured by the camera of the mobile device for areas of the environment where the quality of a coarse 3D reconstruction remains good enough for the final application. This indeed limits the computational load of the overall reconstruction.

Conversely, the use of a refined 3D reconstruction based on second images captured by the camera of the mobile device (i.e. on images of different nature compared to the first images) is limited to target parts of the environment where there is a need for it, i.e. for areas where a less computational demanding method belonging to a coarse 3D reconstruction method would result in poor quality. In that case, only a refined 3D reconstruction is intentionally performed for those target parts so that the computational load is further limited.

Furthermore, a determination of target parts for which a refined 3D reconstruction shall be used is performed automatically based on the detection of object attributes present in at least some of the first images intended to be used for the coarse 3D reconstruction. The switching between the coarse and refined 3D reconstruction mode can thus be optimized for minimizing the overall computational load for a target quality of the 3D reconstruction of the environment.

Last, only classical features of mobile devices, e.g. camera sensor, are involved in the disclosed technic.

As a result, the 3D reconstruction can be both calculated and then used with the limited hardware capabilities of the mobile device (including memory, power of processing and battery capacity too).

According to various embodiments, the at least one object attribute belongs to the group comprising:
- a saliency attribute representative of a quality by which the target part stands out relative to its neighborhood;
- a geometry attribute of the target part;
- a category attribute representative of an object classification of the target part; and
- a weighted combination of the saliency attribute, the geometry attribute, and the category attribute.

Thus, the mode of operation to be used for the 3D reconstruction of an area of the environment (i.e. coarse or refined mode of operation) may be decided automatically based on objective criteria.

According to different embodiments, the at least one geometry attribute belongs to the group comprising:
- a scale size;
- a distribution density of 3D points;
- a planarity; and
- a shape.

According to one embodiment, the determining automatically further comprises localizing at least one localized area in the environment through a user interface of the mobile device, the at least one target part being determined automatically in the at least one localized area.

Thus, the user has a more accurate control on the target part for which a refined 3D reconstruction may be performed (e.g. using a zoom-in and drawing a 2D bounding curve on the object or smaller region in the environment).

According to one embodiment, the calculating a refined 3D reconstruction of the at least one target part further comprises validating the at least one target part by a user of the mobile device, the calculating a refined 3D reconstruction being performed when the at least one target part is validated.

Thus, the user has a control on the calculation or not of refined 3D reconstruction for a target part that has been automatically determined (e.g. by pressing a button in the user interface of the mobile device to activate the refined 3D reconstruction).

According to one embodiment, the calculating a coarse 3D reconstruction of at least one area of the environment further comprises activating the at least one camera in a first mode of operation for capturing the first pictures.

Thus, some features associated with the camera when entering the coarse 3D reconstruction mode may be switched on when entering this mode, and switched off when the coarse 3D reconstruction is stopped.

According to another embodiment, the calculating a coarse 3D reconstruction of at least one area of the environment further comprises pre-processing the first pictures captured by the camera prior to calculating the coarse 3D reconstruction based on provided pre-processed first pictures, a size of the pre-processed first pictures being compatible with the computational ability of the mobile device.

Thus, the data to be used for performing the coarse 3D reconstruction of the area can be further optimized so as to limit the computational load.

According to one embodiment, the first reconstruction method belongs to the group comprising:
- Structure from Motion (SfM);
- Multi-View Stereo (MVS); and
- Simultaneous Localization And Mapping (SLAM).

Thus, methods well known by the skilled person can be enforced for performing the coarse 3D reconstruction, therefore leading to a robust and efficient implementation of the disclosed technic.

According to one embodiment, the mobile device further comprises a depth sensor, and the coarse 3D reconstruction of at least one area of the environment further takes into account depth maps of the area delivered by the depth sensor.

Thus, the accuracy of the coarse 3D reconstruction of the area may be improved by using additional information delivered by an additional sensor of the mobile device.

According to one embodiment, the calculating a refined 3D reconstruction of the at least one target part further comprises activating the at least one camera in a second mode of operation for capturing the second pictures.

Thus, the camera is activated in a particular mode of operation when the refined 3D reconstruction is activated. This may allow switching on some features associated with the camera when entering this mode, and switching off those features when the refined 3D reconstruction is stopped.

According to one embodiment, the mobile device further comprises at least one flash light activated in the second mode, and the calculating a refined 3D reconstruction of the at least one target part enforces a multiview photometric stereo method taking into account photometric data based on the second pictures and on an associated position of the at least one flash light, the associated position of the at least one flash light being estimated from a position of the at least one camera of the mobile device.

Thus, a multiview photometric stereo method, based on photometric data provided based on the second pictures captured by the camera activated in the second mode, can be enforced for performing the refined 3D reconstruction. This is possible as the position of the flash light may be obtained through the position of the camera even if the mobile device moves. This leads to an efficient implementation of the disclosed technic while taking advantage of the mobility of the camera capturing the second images over traditional photometric stereo methods.

According to one embodiment, the multiview photometric stereo method further takes into account a reflectance associated with the object classification of the at least one target part.

Thus, the processing time of the multiview photometric stereo method is reduced due to the availability of the reflectance of the target part to be reconstructed (e.g. through material parameters, like the reflectance, associated with the object classification of the target part).

According to one embodiment, the second pictures comprise successive pictures, and the photometric data are based on pictures selected from the successive pictures taking into account a confidence level in a correspondence between pixels at a same location in the successive pictures.

Thus, the captured pictures are also selected for reliable refined 3D photometric computing.

According to one embodiment, the calculating a refined 3D reconstruction of the at least one target part further comprises pre-processing the photometric data prior to calculating the refined 3D reconstruction based on provided pre-processed photometric data, a size of the pre-processed photometric data being compatible with the computational ability of the mobile device.

Thus, the data to be used for performing the refined 3D reconstruction of the target part can be further optimized (e.g. through selection of key frames, patch cropping, feature representations, etc.) so as to limit the computational load.

According to one embodiment, the aggregating the reconstructions calculated for the at least one area enforces a multi-view stereo methodology for providing a multi-resolution representation as being the 3D reconstruction of the environment.

Thus, the rendering of the 3D reconstruction of the environment is facilitated on a device with limited computational resources like a mobile device.

Another aspect of the present disclosure relates to a computer program product comprising program code instructions for implementing the above-mentioned method for 3D reconstruction of an environment of a mobile device comprising at least one camera (in any of its different embodiments), when the program is executed on a computer or a processor.

Another aspect of the present disclosure relates to a non-transitory computer-readable carrier medium storing a computer program product which, when executed by a computer or a processor causes the computer or the processor to carry out the above-mentioned method for 3D reconstruction of an environment of a mobile device comprising at least one camera (in any of its different embodiments).

Another aspect of the present disclosure relates to a device for 3D reconstruction of an environment of a mobile device comprising at least one camera. Such device comprises a memory and at least one processor configured for:
- calculating a coarse 3D reconstruction of at least one area of the environment by a first reconstruction method, the first reconstruction method taking into account at least first pictures of the at least one area captured by the at least one camera;
- determining automatically if at least one target part exists in the environment based on at least a detection of at least one object attribute, the detection taking into account at least one of the first pictures;
- calculating a refined 3D reconstruction of the at least one target part by a second reconstruction method, the second reconstruction method taking into account at least second pictures of the at least one target part captured by the at least one camera;
- aggregating the calculated reconstructions for providing the 3D reconstruction of the environment.

Yet another aspect of the present disclosure relates to another device for 3D reconstruction of an environment of a mobile device comprising at least one camera. Such device comprises:
- means for calculating a coarse 3D reconstruction of at least one area of the environment by a first reconstruction method, the first reconstruction method taking into account at least first pictures of the at least one area captured by the at least one camera;
- means for determining automatically if at least one target part exists in the environment based on at least a detection, by means for detecting, of at least one object attribute, the detection taking into account at least one of the first pictures;
- means for calculating a refined 3D reconstruction of the at least one target part by a second reconstruction method, the second reconstruction method taking into account at least second pictures of the at least one target part captured by the at least one camera;
- means for aggregating the calculated reconstructions for providing the 3D reconstruction of the environment.

Such devices are particularly adapted for implementing the method for 3D reconstruction of an environment of a mobile device comprising at least one camera according to the present disclosure (in any of its different embodiments). Thus, the characteristics and advantages of those devices are the same as the disclosed method for 3D reconstruction of an environment of a mobile device comprising at least one camera (in any of its different embodiments).

Another aspect of the present disclosure relates to a mobile device comprising a device for 3D reconstruction of an environment of a mobile device comprising at least one camera as disclosed above.

Thus, the characteristics and advantages of such a mobile device are the same as the disclosed method for 3D reconstruction of an environment of a mobile device comprising at least one camera (in any of its different embodiments).

According to different embodiments, the mobile device is preferably chosen among a mobile phone and a tablet.

### 4. LIST OF FIGURES

Other features and advantages of embodiments shall appear from the following description, given by way of indicative and non-exhaustive examples and from the appended drawings, of which:
- Figures 1 a and 1 b are flowcharts of particular embodiments of the disclosed method for 3D reconstruction of an environment of a mobile device according to different embodiments of the present disclosure;
- Figure 2 illustrates concepts involved in a multiview photometric stereo method enforced for the refined 3D reconstruction of a target part according to one embodiment of the method of figures 1 a and 1 b;
- Figure 3 illustrates the implementation of the disclosed method for 3D reconstruction of an environment of a mobile device during the displacement of the mobile device according to one embodiment of the method of figures 1 a and 1 b;
- Figure 4 is a schematic illustration of the structural blocks of an exemplary device that can be used for implementing the method for 3D reconstruction of an environment of a mobile device according to the different embodiments disclosed in relation with figures 1 a and 1 b.

### 5. DETAILED DESCRIPTION

In all of the figures of the present document, the same numerical reference signs designate similar elements and steps.

The general principle of the disclosed method consists in calculating a coarse 3D reconstruction of an area of an environment of a mobile device using a first reconstruction method that takes into account at least first pictures of the area captured by one camera of the mobile device. The existence of a target part in the environment is automatically determined based on a detection of at least one object attribute that takes into account at least one of the first pictures. A refined 3D reconstruction of the target part is calculated using a second reconstruction method that takes into account at least second pictures of the target part that are captured by the camera of the mobile device. The calculated reconstructions are aggregated for providing a 3D reconstruction of the environment of the mobile device. This allows achieving the 3D reconstruction of the environment for a limited computational cost, while providing a good reconstruction quality of finer details for objects with particular characteristics, i.e. for objects automatically determined as target parts.

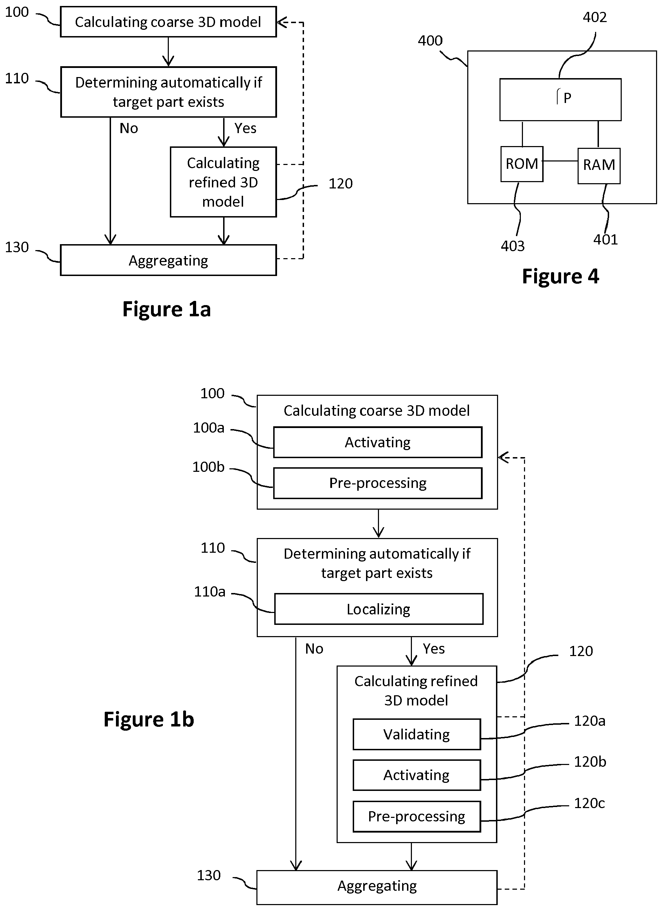

Referring now to **figures 1a and 1b****,** we illustrate a method for 3D reconstruction of an environment of a mobile device according to different embodiments of the present disclosure.

In block 100, a coarse 3D reconstruction of an area of an environment of a mobile device (200) is calculated using a first reconstruction method that takes into account at least first pictures of the area that are captured by a camera (201) of the mobile device (200).

For that, in block 100a, the camera (201) of the mobile device (200) (e.g. a mobile phone or a tablet) is activated in a first mode of operation for capturing the first pictures, e.g. lively.

Depending on the first method used for implementing the coarse 3D reconstruction of the area, the camera (201) of the mobile device (200) may be activated in different ways, or some features associated with the camera (201) may be switched on when entering the coarse 3D reconstruction mode, and switched off when the coarse 3D reconstruction is stopped. For instance, the camera (201) may be activated in a color mode (i.e. as capturing color first pictures), and the calibrated intrinsic parameters of camera are keep constant.

In various embodiments, the first method belongs to the group comprising:
- Structure from Motion (SfM);
- Multi-View Stereo (MVS); and
- Simultaneous Localization And Mapping (SLAM).

In those cases, the coarse 3D reconstruction is based on methods well-known by the skilled person as discussed for instance in *"*P. Ondruska, P. Kohli, S. Izadi. "MobileFusion: Real-time Volumetric Surface Reconstruction and Dense Tracking on Mobile Phones." IEEE Transactions on Visualization & Computer Graphics, 2015*.*"

Such methods use classical photographic pictures for determining depth maps so as to calculate the coarse 3D reconstruction of the area. In that case, the camera (201) may thus be a color camera as classically encountered for mobile devices like smartphones (e.g. based on the use of CMOS sensors).

In one embodiment, the mobile device (200) further comprises a depth sensor. In that case, the first method used for calculating the coarse 3D reconstruction of the area further takes into account for depth maps of the area that are delivered by the depth sensor. The accuracy of the coarse 3D reconstruction of the area may thus be improved by using additional information delivered by an additional sensor of the mobile device.

In the same way, the above-discussed methods that may be used as the first method determine the displacements of the camera (201) of the mobile device (200) based on an analysis of the first pictures captured by the camera (201) (e.g. by real-time camera tracking) for calculating the coarse 3D reconstruction. However, in alternative embodiments, the mobile device (200) is further equipped with sensors allowing deriving its displacement, e.g. inertial measurement unit, accelerometer, gyroscope, compass, location tracking device like GPS... In those cases, the accuracy of the coarse 3D reconstruction of the area may be improved by using additional information delivered by such additional sensors of the mobile device.

In one embodiment, in block 100b, the first pictures captured by the camera (201) are pre-processed prior to calculating the coarse 3D reconstruction based on provided pre-processed first pictures. In that case, a size of the pre-processed first pictures is made compatible with the computational ability of the mobile device (200) so that the computational load of the coarse 3D reconstruction of the area can be further optimized (e.g. though selection of key frames, patch cropping, feature representations, etc., that allow the size of the pre-processed first pictures to be compatible with the memory and computational ability of the mobile device).

In block 110, it is determined automatically if a target part (e.g. a particular object in the environment for which a coarse 3D reconstruction may lead to poor results) exists in the environment of the mobile device (200) based on at least a detection of at least one object attribute. Such detection takes into account at least one of the first pictures, captured by the camera (201) from one or more areas of the environment.

In various embodiments, such object attribute may belong to the group comprising:
- a saliency attribute representative of a quality by which the target part stands out relative to its neighborhood;
- a geometry attribute of the target part;
- a category attribute representative of an object classification of the target part; and
- a weighted combination of the saliency attribute, the geometry attribute, and the category attribute.

More particularly, the target part may be detected automatically based on its saliency in at least one of the first pictures, e.g. using a known method for the saliency detection (see for instance "A. Borji, M. Cheng, H. Jiang, J. LI. "Salient Object Detection: A Survey." arXiv eprint, 2014."). Such method for the saliency detection usually outputs both a saliency map and a segmentation of the entire object. The intensity of each pixel in the saliency map represents its probability of belonging to salient objects, which could be used to compute a saliency score value representative of a saliency attribute of the target part that is being automatically detected.

In the same way, in various embodiments, the geometry attribute belongs to the group comprising:
- a scale size;
- a distribution density of 3D points;
- a planarity; and
- a shape.

Such geometry attribute may be derived through the processing of the first pictures (or of the pre-processed first pictures depending if block 100b is implemented or not) captured from one or more areas of the environment, so as to recognize a particular geometry attribute in the target part being determined.

Last, a category attribute representative of an object classification of the target part may be determined, e.g. based on the material of the target part. This can be done for instance by using a large and deep convolutional neural network that is trained in ImageNet dataset for achieving well-performed classification (see for instance "A. Krizhevsky, I. Sutskever, G.E. Hinton. "ImageNet Classification with Deep Convolutional Neural Networks." NIPS, 2012*.*"). The category attribute may then be derived from the object classification, e.g. using a correspondence look-up table that maps the various categories that belong to the object classification, and their corresponding category attribute (e.g. their common material parameters) that may be interpreted as representative of the necessity for the corresponding target part to be refined. For example, the metal material should lead to a category attribute that makes the corresponding target part made of metal (i.e. a "shiny" object) more requiring for a refined 3D reconstruction than a target part made of wood material.

In one embodiment, the object attribute is a weighted combination of two or three of the saliency attribute, the geometry attribute, and the category attribute, in order to determine whether the corresponding target part is necessary to be refined or not. In various embodiments, the weights used in the detection of the object attribute may be adjusted by user's experience, or initialized according to the learned parameters from large dataset using machine learning methods.

Based on the detection of such object attribute, the target parts for which a refined 3D reconstruction may be calculated are thus determined automatically.

In one embodiment, in block 110a, at least one localized area in the environment is localized through a user interface of the mobile device (200) (e.g. using a zoom-in and drawing a 2D bounding curve on the object or smaller region in the environment).

In that case, the target part is determined automatically in the localized area according to the method disclosed above in relation with block 100, in any one of its embodiments. A user of the mobile device (200) has thus a more accurate control on the target part for which a refined 3D reconstruction may be performed.

In block 120, a refined 3D reconstruction of the target part determined automatically in block 110 is calculated using a second reconstruction method that takes into account at least second pictures of the target part that are captured by the camera (201) of the mobile device (200).

In one embodiment, the target part for which the refined 3D reconstruction shall be performed is first validated by the user of the mobile device (200) in block 120a.

For instance, the object attribute determined in block 110 for the target part may be provided to the user of the mobile device (200) through the user interface so that he can select to validate or not the target part based on related objective information (e.g. by pressing a button in the user interface of the mobile device to activate the refined 3D reconstruction).

In that case, the user has a control on the calculation or not of a refined 3D reconstruction for a target part that has been automatically determined.

In block 120b, the camera (201) of the mobile device (200) is activated in a second mode of operation for capturing the second pictures.

Depending on the second method used for implementing the refined 3D reconstruction of the area, the camera (201) of the mobile device (200) may indeed be activated in different ways. Accordingly, some features associated with the camera (201) when entering the refined 3D reconstruction mode may be switched on when entering this mode, and switched off when the refined 3D reconstruction is stopped.

For instance, in one embodiment, the second method is a multiview photometric stereo method. In that case, the mobile device (200) further comprises at least one flash light (202) that is activated when entering the refined 3D reconstruction mode for capturing the second pictures the photometric data are based on. The flash light (202) is then switched off when the refined 3D reconstruction is stopped. On top of allowing for the capture of the second pictures the photometric data are based on, having the flash light on may warn the user of the mobile device (200) that the mobile device (200) has entered a refined 3D reconstruction mode. The user has thus the ability to move the mobile device (200) around the target part in a way more adapted to the capture of the second pictures required for enforcing the second method involved in the refined 3D reconstruction (e.g. more slowly, or closer to the target part).

Back to block 120, in one embodiment, the second method is a known photometric stereo method, i.e. based on a set of light sources that vary in intensity while being fixed in position during the capture of the second pictures. However, it appears that such classical method is not well suited for mobile devices for which the light source, i.e. the flash light (202), moves according to the mobile device (200).

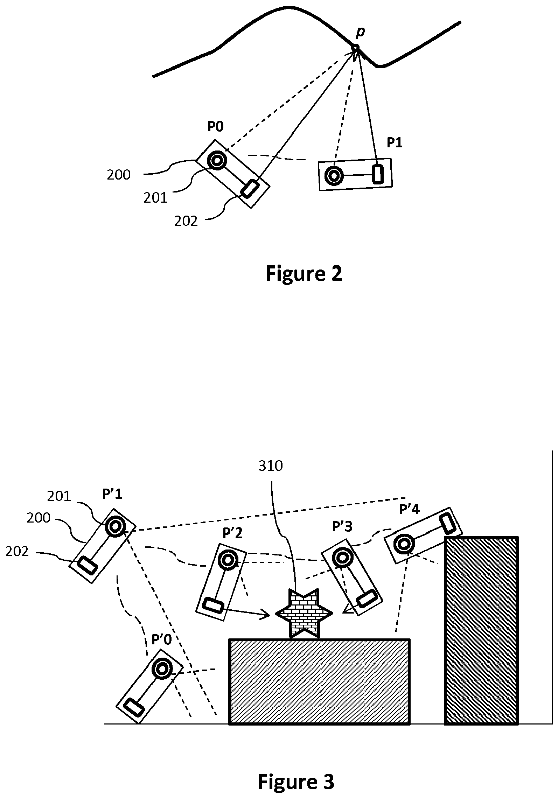

Thus, in another embodiment, the second method is a multiview photometric stereo method, as disclosed for instance in "C. Hernandez, G. Vogiatzis, R. Cipolla. "Multi-view photometric stereo", PAMI, 2008*.*", i.e. with a light source that moves in vertical position during the capture of the second pictures. However, such method can be adapted so as taking into account a light source that moves according to the mobile device (200). As illustrated in **figure 2**, such method estimates a surface normal by observing the surface under different lighting conditions using various reflectance models. For that, second pictures of one 3D point *p* in the target part to be refined are captured by the camera 201 in different positions of the flash light 202, e.g. when the mobile device 200 moves from position P0 to position P1.

As the camera 201 and the flash light 202 are fixed on the mobile device 200, the position of the light source can be estimated from a position of the camera 201 of the mobile device 200 (that in turn can be estimated based on an analysis of the second pictures captured by the camera 201, e.g. by real-time camera tracking, or using information delivered from further sensors, e.g. inertial measurement unit, accelerometer, gyroscope, compass, location tracking device like GPS, as discussed above in relation with block 100).

This leads to an efficient implementation of the multiview photometric stereo method while taking advantage of the mobility of the camera capturing the second images over a classical implementation of a photometric stereo method.

In one embodiment, the second reconstruction method enforces a multiview photometric stereo method that takes into account a reflectance associated with the object classification of the target part to be refined.

Indeed, the environment is usually assumed to be under ambient lighting conditions. Furthermore the reflectance of one object in the environment follows Lambert's law, i.e. points on the surface keep their appearance constant irrespective of the considered viewpoint. Thus, instead of letting the multiview photometric stereo method estimating the reflectance of objects in the environment, the objects attributes (e.g. the category attribute) detected in block 100 may be used for associating a reflectance to an object in the environment that is candidate for being a target part. Such association may be based on the use of existing database (see for instance "W. Matusik, H. Pfister, M. Brand, L. McMillan. "A Data-Driven Reflectance Model. "ACM Transactions on Graphics, 2003") like the MERL (for "Mitsubishi Electric Research Laboratories") database that includes hundred measured isotropic BRDF functions (Bidirectional Reflectance Distribution Functions) of common materials, such as plastic, wood, metal, phenolic, acrylic, etc. With the use of lookup table taking as an input the object category attribute, the reflectance of target parts could be initially determined quickly and the procedure of the multiview photometric stereo method is accelerated.

In another embodiment, the second pictures comprise successive pictures and the photometric data are based on pictures selected from those successive pictures by taking into account a confidence level in a correspondence between pixels at a same location in the successive pictures. In other words, a confidence level in a correspondence between pixels at a same location in successive pictures captured by the camera 201 activated in the second mode of operation may be used as a criterion for selecting the pictures to be used for deriving the photometric data. The calculated refined 3D model of the target part may thus be more reliable.

In yet another embodiment, the photometric data derived from the second pictures are pre-processed prior in block 120c for calculating the refined 3D reconstruction based on provided pre-processed photometric data.

More particularly, the size of the pre-processed photometric data is made compatible with the computational ability of the mobile device 200 (e.g. through selection of key frames, patch cropping, feature representations, etc.). The data to be used for performing the refined 3D reconstruction of the target part can thus be further optimized so as to limit the computational load of the mobile device 200.

In block 130, the coarse 3D reconstructions calculated in block 100 for areas of the environment and the refined 3D reconstructions calculated in block 120 for target parts of the environment are aggregated for providing the 3D reconstruction of the environment.

In one embodiment, all the coarse and refined 3D reconstructions are first calculated, and the aggregation is performed at the end of the process, i.e. by aggregating all the calculated 3D reconstructions available.

In another embodiment, the coarse and refined 3D reconstructions are aggregated on the fly, i.e. once they are available, to a current 3D reconstruction that thus corresponds to the 3D reconstruction of the environment at the end of the process.

In one embodiment, the aggregation of the coarse and refined 3D reconstructions implements a multi-view stereo methodology (see for instance "K. Morooka, H. Nagahashi. "A Method for Integrating Range Images with Different Resolutions for 3-D Model Construction." ICRA, 2006*.*") for providing the 3D reconstruction of the environment in the form of a multi-resolution representation.

As a result, the 3D reconstruction can be both calculated and used with the limited hardware capabilities of the mobile device 200 (including memory, power of processing and battery capacity too).

Referring now to **figure 3**, we illustrate the implementation of the disclosed method for 3D reconstruction of an environment of a mobile device 200 during the displacement of the mobile device 200 according to one embodiment of the method of figures 1 a and 1 b.

We assume for instance that the two cube shaped objects 301, 302 are made of wood, and the polygonal shaped object 310 is made of metal.

When the mobile device 200 is located at position P'0, the disclosed method starts with a coarse 3D reconstruction of the area seen by the camera 201. The coarse 3D reconstruction is based on first pictures captured by the camera 201 activated in a first mode of operation. More particularly, at position P'0, the area captured by the camera 201 contains a planar surface, so its geometry attribute is detected as being representative of an object that does not need a refined 3D reconstruction and the coarse 3D reconstruction continues.

When the mobile device 200 is moved toward position P'1, the area seen by the camera 201 of the mobile device 200 contains the polygonal shaped object 310 made of metal. The saliency attribute of the polygonal shaped object 310 is detected, based on at least one of the first pictures captured by the camera 201 at position P'1, as being representative of an object that may need a refined 3D reconstruction. However, due to the distance between the camera 201 and the polygonal shaped object 310, its scale size remains much smaller compared with the typical size encountered in the area seen by the camera 201. Although the detected category attribute may be representative of an object that may need a refined 3D reconstruction (due to the metal material the polygonal shaped object 310 is made of), its geometry attribute remains representative of an object that does not need a refined 3D reconstruction so that it is not identified as a target part to be refined at the end. Consequently, the coarse 3D reconstruction continues based on first pictures captured by the camera 201 at this position.

When the camera moves to position P'2, the saliency attribute of the polygonal shaped object 310, detected based on at least one of the first pictures captured by the camera 201 at position P'2, is still representative of an object that may need a refined 3D reconstruction (alternatively, the salient attribute of the polygonal shaped object 310 is detected based on a combination of at least one of the first pictures captured by the camera 201 at position P'1 and of at least one of the first pictures captured by the camera 201 at position P'2 in case there is an overlap in the representation of the polygonal shaped object 310 in the corresponding first pictures). In the same way, both its geometry attribute and its category attribute are detected as representative of an object that may need a refined 3D reconstruction. The polygonal shaped object 310 is consequently identified as a target part to be refined.

The flash light 202 is then switched on and the camera is activated in a second mode of operation for capturing second pictures. A refined 3D reconstruction of the target part is calculated enforcing a multiview photometric stereo method taking into account photometric data based on the second pictures.

Being warned that a refined 3D reconstruction is going on by seeing that the flash light 202 is on, the user keeps moving the camera 201 around the polygonal shaped object 310 toward position P'3. As the object attributes remain almost the same for the polygonal shaped object 310 during the displacement of the mobile device 200 from position P'2 toward position P'3, the refined 3D reconstruction keeps going-on along the displacement.

When the camera 201 moves to position P'4, the area captured by the camera 201 contains planar surfaces. Consequently, the detected geometry attribute is representative of an object that does not need a refined 3D reconstruction and the refined 3D reconstruction of the polygonal shaped object 310 is thus stopped.

The flash light 202 is then switched off and the camera is activated in a first mode of operation for capturing first pictures. A coarse 3D reconstruction of the area of the environment seen by the camera 201 at position P'4 is then calculated based on both depth maps and on the displacements of the camera 201 of the mobile device 200 obtained based on an analysis of the first pictures captured by the camera 201 as discussed above in relation with block 100.

Referring now to **figure 4**, we illustrate the structural blocks of an exemplary device that can be used for implementing the method for 3D reconstruction of an environment of a mobile device according to any of the embodiments disclosed above in relation with figures 1 a and 1 b.

In an embodiment, a device 400 for implementing the disclosed method comprises a non-volatile memory 403 (e.g. a read-only memory (ROM) or a hard disk), a volatile memory 401 (e.g. a random access memory or RAM) and a processor 402. The non-volatile memory 403 is a non-transitory computer-readable carrier medium. It stores executable program code instructions, which are executed by the processor 402 in order to enable implementation of the method described above (method for 3D reconstruction of an environment of a mobile device) in its various embodiments disclosed in relationship with figures 1 a and 1 b.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

All the steps of the above method for 3D reconstruction of an environment of a mobile device may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In one embodiment, the device 400 for implementing the disclosed method for 3D reconstruction of an environment of a mobile device is embedded directly in the mobile device 200 for allowing a generation of the 3D reconstruction of the environment in the mobile device 200.

In another embodiment, the device 400 for implementing the disclosed method is embedded in a distant server. In that case, the server performs the generation of the 3D reconstruction of the environment, for instance after transmission by the mobile device 200 of the data representative of the first and second pictures to the server.

## Claims

1. Method for 3D reconstruction of an environment of a mobile device (200) comprising at least one camera (201),
**characterized in that** it comprises:
• **calculating** (100) a coarse 3D reconstruction of at least one area of said environment by a first reconstruction method,
said first reconstruction method taking into account at least first pictures of said at least one area captured by said at least one camera;
• **determining automatically** (110) if at least one target part exists in said environment based on at least a detection of at least one object attribute, said detection taking into account at least one of said first pictures;
• **calculating** (120) a refined 3D reconstruction of said at least one target part by a second reconstruction method,
said second reconstruction method taking into account at least second pictures of said at least one target part captured by said at least one camera;
• **aggregating** (130) the calculated reconstructions for providing said 3D reconstruction of said environment.

2. Method according to claim 1, wherein said at least one object attribute belongs to the group comprising:
• a saliency attribute representative of a quality by which said target part stands out relative to its neighborhood;
• a geometry attribute of said target part;
• a category attribute representative of an object classification of said target part; and
• a weighted combination of said saliency attribute, said geometry attribute, and said category attribute.

3. Method according to claim 2, wherein said at least one geometry attribute belongs to the group comprising:
• a scale size;
• a distribution density of 3D points;
• a planarity; and
• a shape.

4. Method according to any of the claims 1 to 3, wherein said **determining automatically** (110) further comprises:
• **localizing** (110a) at least one localized area in said environment through a user interface of said mobile device;
said at least one target part being determined automatically in said at least one localized area.

5. Method according to any of the claims 1 to 4, wherein said calculating (120) a refined 3D reconstruction of said at least one target part further comprises:
• **validating** (120a) said at least one target part by a user of said mobile device;
said calculating a refined 3D reconstruction being performed when said at least one target part is validated.

6. Method according to any of the claims 1 to 5, wherein said calculating (100) a coarse 3D reconstruction of at least one area of said environment further comprises:
• **activating** (100a) said at least one camera in a first mode of operation for capturing said first pictures.

7. Method according to any of the claims 1 to 6, wherein said first reconstruction method belongs to the group comprising:
• Structure from Motion SfM;
• Multi-View Stereo MVS; and
• Simultaneous Localization And Mapping SLAM.

8. Method according to any of the claims 1 to 7, wherein said mobile device further comprises a depth sensor,
and wherein said coarse 3D reconstruction of at least one area of said environment further takes into account depth maps of said area delivered by said depth sensor.

9. Method according to any of the claims 1 to 8,
and wherein said **calculating** (120) a refined 3D reconstruction of said at least one target part further comprises:
• **activating** (120b) said at least one camera in a second mode of operation for capturing said second pictures.

10. Method according to claim 9, wherein said mobile device further comprises at least one flash light (202),
wherein said at least one flash light is activated in said second mode,
and wherein said **calculating** (120) a refined 3D reconstruction of said at least one target part enforces a multiview photometric stereo method taking into account photometric data based on said second pictures and on an associated position of said at least one flash light,
said associated position of said at least one flash light being estimated from a position of said at least one camera of said mobile device.

11. Method according to claim 10 in that it depends on claim 2, wherein said multiview photometric stereo method further takes into account a reflectance associated with said object classification of said at least one target part.

12. Method according to any of the claims 1 to 11, wherein said aggregating (130) the reconstructions calculated for said at least one area enforces a multi-view stereo methodology for providing a multi-resolution representation as being said 3D reconstruction of said environment.

13. Computer program product **characterized in that** it comprises program code instructions for implementing the method according to at least one of the claims 1 to 12, when said program is executed on a computer or a processor.

14. Device (400) for 3D reconstruction of an environment of a mobile device (200) comprising at least one camera (201), said device comprising:
- a memory (401, 403); and
- at least one processor (402) **characterized in that** it is configured for:
• calculating a coarse 3D reconstruction of at least one area of said environment by a first reconstruction method,
said first reconstruction method taking into account at least first pictures of said at least one area captured by said at least one camera;
• determining automatically if at least one target part exists in said environment based on at least a detection of at least one object attribute,
said detection taking into account at least one of said first pictures;
• calculating a refined 3D reconstruction of said at least one target part by a second reconstruction method,
said second reconstruction method taking into account at least second pictures of said at least one target part captured by said at least one camera;
• aggregating the calculated reconstructions for providing said 3D reconstruction of said environment.

15. Device according to claim 14 wherein said at least one processor is further configured for implementing the method according to any of the claims 2 to 12.

16. Mobile device (200) **characterized in that** it comprises a device according to claim 14 or 15, said mobile device being preferably chosen among a mobile phone and a tablet.
